# EUROPEAN PATENT SPECIFICATION

(11) **EP 3 774 095 B1**
(45) Date of publication and mention of the grant of the patent: **10.12.2025**
(21) Application number: 19724614.3
(22) Date of filing: 11.04.2019
(51) Int. Cl.: B09B 3/00, B03B 9/06, B07B 1/20, B07B 13/16, B02C 23/08

(54) **PLANT FOR THE TREATMENT OF WASTES**
ANLAGE ZUR BEHANDLUNG VON ABFALL
INSTALLATION DE TRAITEMENT DE DÉCHETS

(30) Priority: 12.04.2018 IT 201800004458
(43) Date of publication of application: 17.02.2021
(73) Proprietor: Palmieri S.p.A., 40041 Gaggio Montano (BO) frazione Silla (IT)
(72) Inventor: PALMIERI, Silvano, 40041 Gaggio Montano (BO), Frazione Silla (IT)
(74) Representative: Luppi, Emanuele
(86) International application number: PCT/IB2019/052993
(87) International publication number: WO 2019/198025

(56) References cited:
- CN-U- 205 043 998
- GB-A- 190 720 053
- GB-A- 267 426
- GB-A- 407 778
- GB-A- 435 344

## Description

### Technical Field

The present invention relates to a plant for the treatment of wastes.

### Background Art

With particular reference to the industrial sector of waste disposal, to date plants are known comprising a support frame of an outer casing provided with an inlet opening of the wastes to be treated and an outlet opening of the treated wastes. It is hereby specified that in the present treatise the word "wastes" relates to household, special and hazardous wastes, without distinction.

The outer casing generally comprises a movement chamber provided with movement means of the wastes to be treated along a direction of forward movement.

In addition, the plant comprises a sorting chamber located downstream of the movement chamber with respect to the direction of forward movement and comprising sorting means of the wastes to be treated.

The movement means and the sorting means are of the type of an Archimedean screw element associated with the relevant motorization means and operated in rotation around the respective rotation axes substantially orthogonal to each other.

These plants do, however, have a number of drawbacks, in particular tied to the difficulty of removing wastes, or fragments of same, the overall dimensions of which cause the slowing down or stopping of the movement means.

In this regard, it is known that the wastes to be treated consist of a mixture of heterogeneous fragments of different sizes, and therefore volumetric overall dimensions.

It often happens, in fact, that bulky fragments, i.e. fragments that are larger than the load capacity of the movement means, stop the movement of the latter.

In particular, ferrous fragments are often the cause of plant malfunctions, as they get caught between the Archimedean screw element and the side walls of the movement chamber, blocking the rotation of the Archimedean screw element itself.

To date, removal of bulky fragments from the movement means requires for the intervention of an operator located in the proximity of the inlet opening on a support element of the type of a bridge crane who, by using the grab means, grabs the bulky fragment by extracting it from the movement chamber. Alternatively, in the case of particularly bulky fragments the manual removal of which is prevented by the size of the latter or by their respective position on the movement means, it is necessary to proceed with the disassembly of the movement chamber, thus considerably extending the operating times necessary for the extraction of the aforementioned fragments.

Furthermore, the bulky fragments cause the initial slowing down of the movement means until these are brought to a halt. In this regard, it is easy to understand how the overload of the movement means caused by the presence of these fragments causes a significant increase in the absorption of the motorization means with a consequent increase in the operating costs of the plant.

Another drawback is represented by the fact that the frequent interruptions linked to the removal operations of the bulky fragments have a significant impact on the overall productivity of the plant, leading to long working times. Other plant for the treatment of wastes are known from GB 435 344, GB 267 426, GB 407 778, GB 20053, CN 205 043 998.

### Description of the Invention

The main aim of the present invention is to devise a plant for the treatment of wastes that allows simplifying the removal operations of the bulky residues from the movement means.

Within this aim, one object of the present invention is to devise a plant for the treatment of wastes that allows considerably reducing the wastes of time associated with the removal operations of the bulky fragments, considerably reducing the working times and the plant management costs leading to a significant increase in the overall productivity of the latter.

Another object of the present invention is to devise a plant for the treatment of wastes that allows overcoming the mentioned drawbacks of the prior art in a simple, rational, easy, effective to use and cost effective solution.

The aforementioned objects are achieved by the present plant for the treatment of wastes having the characteristics of claim 1.

### Brief Description of the Drawings

Other characteristics and advantages of the present invention will be more evident from the description of a preferred, but not exclusive, embodiment of a plant for the treatment of wastes, illustrated by way of an indicative, yet nonlimiting example, in the attached tables of drawings in which:

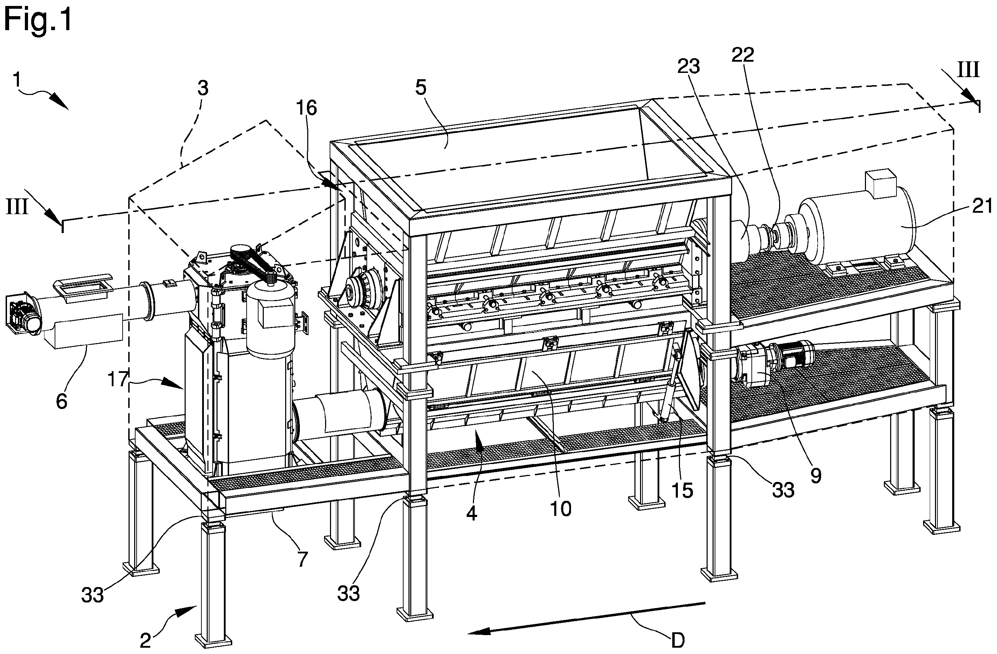

Figure 1 is an axonometric view of the plant according to the invention;

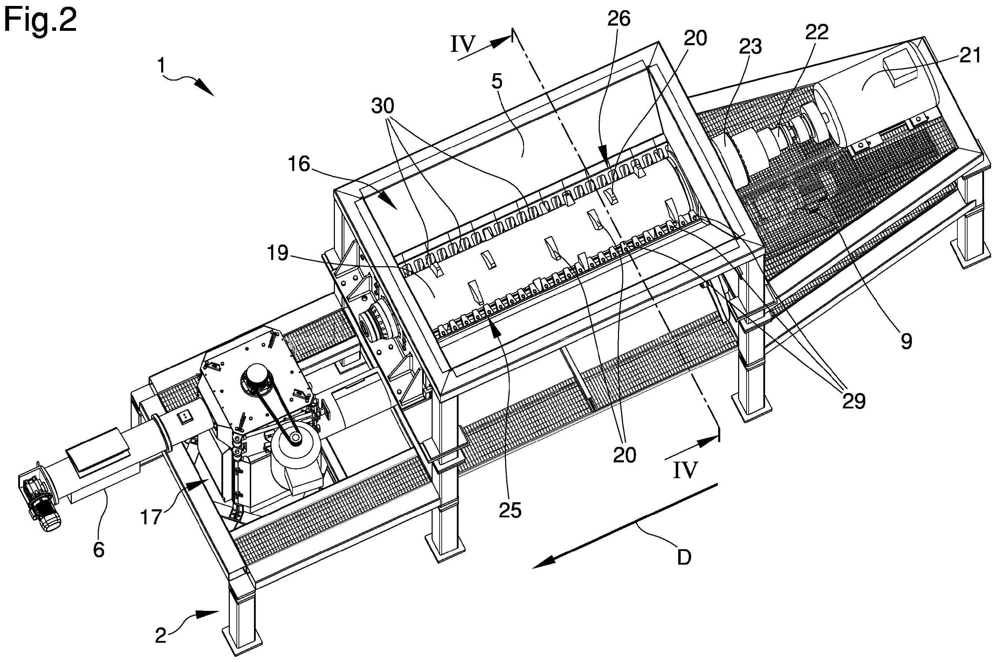

Figure 2 is an axonometric view from the top of the plant according to the invention;

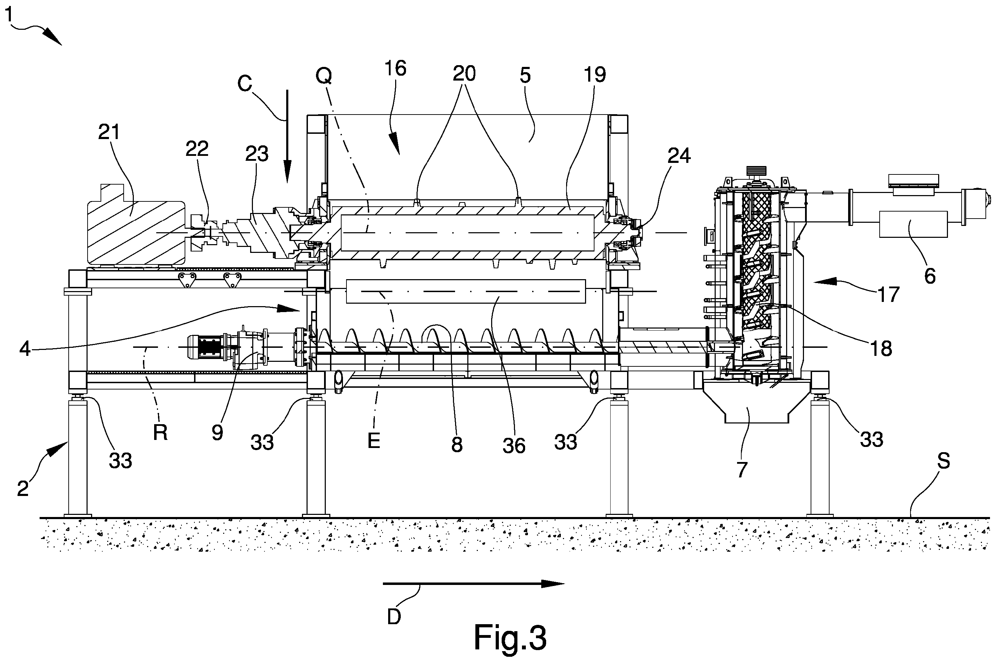

Figure 3 is a cross-sectional view along the plane III-III of Figure 1;
Figure 4 is a cross-sectional view along the plane IV-IV of Figure 2 in a configuration of use of the plant according to the invention;
Figure 5 is a cross-sectional view along the plane IV-IV of Figure 2 in a further configuration of use of the plant according to the invention;
Figure 6 is a cross-sectional view along the plane IV-IV of Figure 2 in the first angular configuration of the plant according to the invention;
Figure 7 is a cross-sectional view along the plane IV-IV of Figure 2 in the second angular configuration of the plant according to the invention;

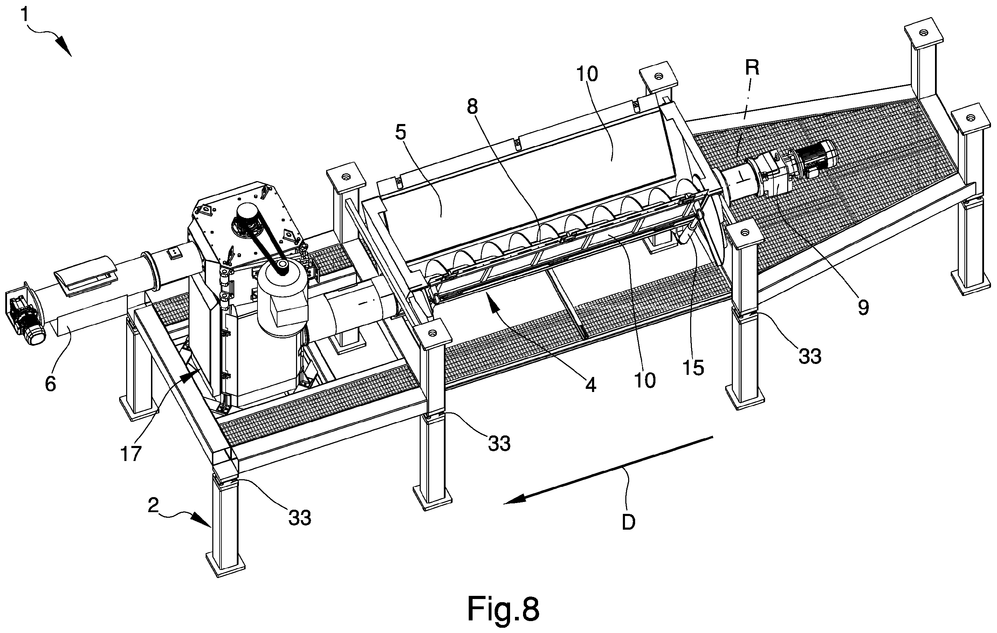

Figure 8 is an axonometric view of the plant according to the invention in an alternative embodiment.

### Embodiments of the Invention

With particular reference to these illustrations, reference numeral 1 globally indicates a plant for the treatment of wastes.

The plant 1 comprises at least one support frame 2 of an outer casing 3 comprising a movement chamber 4 of the wastes to be treated.

The outer casing 3 is provided with an inlet opening 5 of the wastes to be treated and with an outlet opening 6, 7 of the treated wastes.

The movement chamber 4 comprises movement means 8, 9 of the wastes to be treated along a direction of forward movement D.

Preferably, the direction of forward movement D is substantially parallel to a horizontal bearing surface S of the support frame 2.

With reference to the particular embodiment shown in the figures, the movement means 8, 9 comprise an Archimedean screw element.

Alternative embodiments cannot however be ruled out wherein the movement means 8, 9 are of the type of conveyor belts of a type known to the technician skilled in the art.

The Archimedean screw element 8 is associated with motorization means 9 and which are adapted to operate it in rotation around a rotation axis R. Furthermore, the movement chamber 4 comprises at least two side walls 10. According to a preferred embodiment of the plant 1, the movement chamber 4 comprises two side walls 10.

Alternative embodiments cannot however be ruled out wherein the movement chamber 4 comprises three, four, five, etc. side walls 10.

According to the invention, at least one of the side walls 10 is associated in a movable manner with the support frame 2 to define an unloading opening 11 of the wastes to be treated.

In particular, the side walls 10 are associated with the support frame 2 by interposition of respective connecting means 12 along a substantially horizontal hinging axis I.

Preferably, the connecting means 12 comprise at least one hinge element associated with the support frame 2 along the hinging axis I.

The hinging axis I is located on top of the rotation axis R; this allows the removal of the wastes to be treated in the space comprised between each side wall 10 and the Archimedean screw element 8.

With reference to the particular embodiment shown in the figures, both side walls 10 are associated with the support frame 2 by interposition of a respective hinge element 12.

This means that the side walls 10 are associated with the support frame 2 along the respective hinging axis I arranged in the proximity of the Archimedean screw element 8.

The movement chamber 4 comprises a lower portion 13 arranged in the proximity of the hinging axes I and an upper portion 14 opposed to the lower portion 13.

Preferably, the movement means 8, 9, that is the Archimedean screw element 8, are located at the lower portion 13.

In addition, the movement chamber 4 has a substantially triangular front section wherein the Archimedean screw element 8 is arranged at a vertex portion coincident with the lower portion 13.

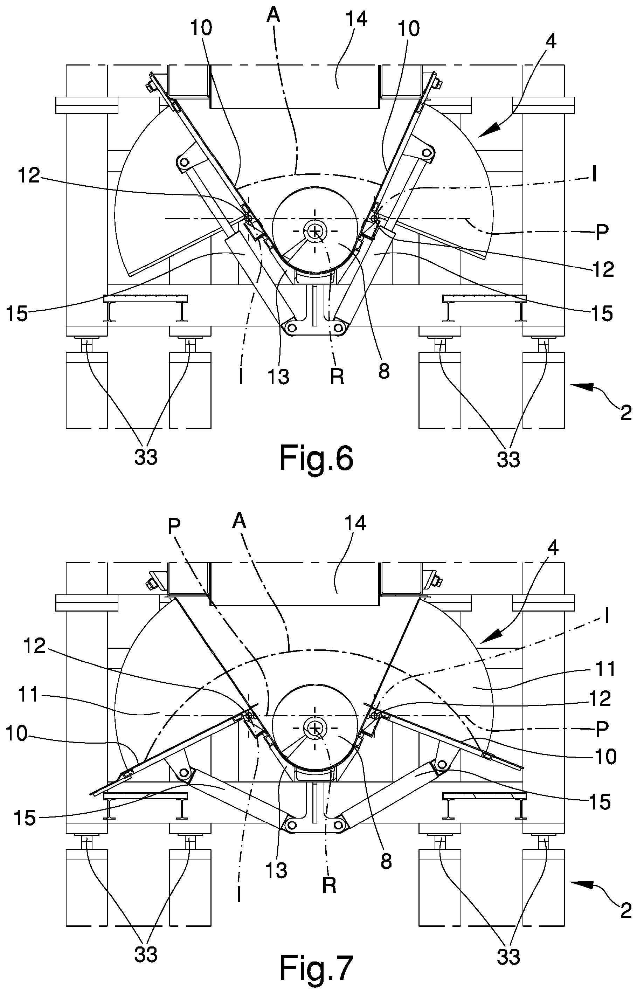

The plant 1 comprises actuating means 15 associated with at least one of the side walls 10 and adapted to allow the movement thereof between a first angular configuration (Figure 6) and a second angular configuration (Figure 7) described in detail in the remainder of the present description.

The actuating means 15 comprise at least one actuator element associated with one of the side walls 10.

With reference to the particular embodiment shown in the figures, the actuating means 15 comprise two actuator elements associated with each side wall 10 respectively.

The actuator elements 15 are of a type known to the technician skilled in the art, such as hydraulic or pneumatic pistons.

Moreover, the actuating means 15, in this case the actuator elements, are operationally connected to activation means, not shown in detail in the figures, and adapted to allow the passage of the side walls 10 from the first angular configuration (Figure 6) to the second angular configuration (Figure 7), and vice versa.

For example, the activation means are of the type of a hydraulic circuit which can be activated by an operator according to needs.

Specifically, when the movement of the Archimedean screw element 8 is blocked by the presence of fragments of wastes to be treated, the overall dimensions of which prevent the free rotation thereof, it is necessary to intervene by removing the latter from the movement chamber 4.

For this purpose, the operator activates the activation means so that the movement means 8, 9 allow the switch from the first angular configuration (Figure 6) wherein the side walls are facing upwards with respect to a horizontal plane P passing through the hinging axes I, and the movement chamber 4 is closed and isolated from the outside, to the second angular configuration (Figure 7) wherein at least one side wall 10 faces downwards with respect to the horizontal plane P to define an unloading ramp of the wastes to be treated, and the movement chamber 4 is open and accessible from the outside.

According to the preferred embodiment of the present invention wherein both the side walls 10 are associated movable with the support frame 2, the latter define an angle A comprising the movement means 8, 9 inside it, that is the Archimedean screw element 8.

In detail, in the first angular configuration (Figure 6) the aforementioned angle A is convex and the movement chamber 4 is closed and isolated from the outside.

At the same time, in the second angular configuration (Figure 7) the angle A is concave and the movement chamber 4 is in communication with the outside and the side walls 10 are arranged sloping to define the unloading opening 11.

In addition, the plant 1 comprises a sorting chamber 17 arranged downstream of the movement chamber 4 with respect to the direction of forward movement D and comprising sorting means 18 of the wastes to be treated fed by the movement means 8, 9.

The sorting means 18 are of a type known to the expert in the field and can e.g., be of the type of an Archimedean screw element housed inside a filter element. The outlet opening 6, 7 is made at the sorting chamber 17. Specifically, the outlet opening 6, 7 comprises a first outlet opening 6 of the treated solid wastes and a second outlet opening 7 of the treated liquid or semi-liquid wastes. Furthermore, the plant 1 comprises a pretreatment chamber 16 arranged on top of the movement chamber 4 and comprising grinding means 19, 20 of the wastes to be treated.

As shown in the figures, the inlet opening 5 is arranged at the pretreatment chamber 16.

The latter is in fact made on the upper ending portion of the outer casing 3.

In this regard, it is specified that in the context of the present discussion, words such as "upper", "lower", "above", "below" and the like are to be considered with reference to an operational configuration wherein the wastes to be treated entering the pretreatment chamber defines a direction of fall C substantially transverse to the direction of forward movement D.

The grinding means 19, 20 preferably comprise a rotor element 19 associated with a motor assembly 21, 22, 23 adapted to allow the rotation thereof around a reference axis Q.

Advantageously, the reference axis Q and the rotation axis R are arranged substantially horizontally and parallel to each other.

Moreover, the grinding means 19, 20 comprise a plurality of shredding elements 20 associated with the rotor element 19.

As shown in the figures, the shredding elements 20 are of the type of protruding wedges with respect to the surface of the rotor element 19.

These shredding elements 20 are evenly distributed on the outer surface of the rotor element 19.

Moreover, the motor assembly 21, 22, 23 comprises motor means 21, clutch means 22 and reduction means 23, and is operatively connected to the processing and monitoring unit configured to control the rotation speed of the grinding means 19, 20.

More specifically, the processing and monitoring unit is configured to control the rotation speed of at least one of the grinding means 19, 20, the movement means 8, 9 and the sorting means 18.

The processing and monitoring unit is preferably configured to control the rotation speed of the grinding means 19, 20 and of the movement means 8, 9.

For this purpose, the processing and monitoring unit comprises detection means for detecting the first values of absorption of the motor assembly 21, 22, 23, and the second values of absorption of the motorization means 9, the latter unit being adapted to vary the rotation speed of the grinding means 19, 20 and/or of the movement means 8, 9 according to the first values of absorption and/or to the second values of absorption.

In other words, the processing and monitoring unit intervenes by blocking the rotation of the rotor element 19 when the first values of absorption exceed a threshold limit value that can be preset depending on the weight of the wastes to be treated entering the pretreatment chamber 16.

More specifically, the processing and monitoring unit intervenes by blocking the rotation of the rotor element 19, i.e. by activating blocking means 24 associated with the latter; this significantly reduces the risk of breakage of the rotor element 19 and slows down the wear processes tied to the overload of the same.

The activation of the blocking means 24 causes the simultaneous activation of the clutch means 22 which interrupt the transmission of motion from the motor means 21 to the reduction means 23.

Moreover, in order to homogenize the grain size of the wastes to be treated entering the plant 1 and to reduce the risk of blockage of the movement means 8, 9, the latter plant comprises adjustment means 25, 31 for adjusting the grain size of the wastes to be treated.

The adjustment means 25, 31 are internally associated with the pretreatment chamber 16 and are movable close to/away from the grinding means 19, 20. The adjustment means 25, 31 comprise a comb element 25 provided with a first support element 27 associated with the pretreatment chamber 16, and a plurality of first tooth elements 28 associated with the first support element 27. Moreover, in order to slow down the wear process to which the comb element 25 is subjected, each first tooth element 28 comprises a covering element 29 made of a rigid and abrasive material.

The comb element 25 is arranged at a predefined distance D₁ from the rotor element 19.

The predefined distance D₁ is adapted to allow the shredding elements 20 to transit substantially to size and is variable in approaching/moving away from the rotor element 19 according to the operators' needs.

In this regard, the adjustment means 25, 31 comprise actuating means 31 associated with the comb element 25 and adapted to vary the predefined distance D₁.

In particular, the actuating means 31 comprise a piston element associated with the comb element 25.

Preferably, the piston element 31 is adapted to vary the predefined distance D₁ depending on the grain size of the wastes to be treated.

More specifically, the piston element 31 performs a motion substantially parallel to the horizontal plane P.

The actuating means 31 are connected to control and adjustment means for controlling and adjusting the predefined distance D₁ which can be operated manually by an operator.

For example, the control and adjustment means are of the type of a hydraulic circuit which can be operated by the operator depending on their requirements. It cannot however be ruled out that the processing and monitoring unit comprises the control and adjustment means of the predefined distance D₁.

At the same time, the plant 1 comprises a counter-comb element 26 associated with the pretreatment chamber 16 on a portion of the latter substantially opposite the comb element 25.

In the same way as the comb element 25, the counter-comb element 26 is also provided with a second support element 34 associated with the pretreatment chamber 16 and with a plurality of second tooth elements 30.

In this regard, it should be underlined that the counter-comb element 26 is adapted to prevent the fall of the wastes to be treated passing through the pretreatment chamber 16 inside the movement chamber 4; this ensures that all the wastes to be treated at the inlet to the pretreatment chamber 16 pass through the grinding means 19, 20 thus reducing their grain size.

The counter-comb element 26 is manually movable by the operator between an operational position in which it is arranged substantially adjacent to the rotor element 19 and an unloading position in which it is moved away from the rotor element 19.

The movement of the counter-comb element 26 from the operational position to the unloading position takes place by means of the manual operation by the operator.

Moreover, the counter-comb element 26 is adapted to allow the removal of any residual wastes to be treated which have remained adhered to the shredding elements 20.

The plant 1 also comprises an iron removing chamber 35 positioned between the pretreatment chamber 16 and the movement chamber 4 and, in turn, comprising iron removing means 36, 37 of the wastes to be treated.

The iron removing chamber 35 comprises a sorting section 38 for sorting the ferrous fragments contained in the wastes to be treated, and a collection section 39 for collecting the ferrous fragments placed below the iron removing means 36, 37.

In detail, the iron removing means 36, 37 comprise at least one hollow cylinder 36 associated with the rotation means adapted to allow the setting in rotation thereof around a relevant centering axis E.

Advantageously, the hollow cylinder 36 is made of a metal material such as, e.g., steel.

Preferably, the centering axis E is substantially parallel to the rotation axis R and to the reference axis Q.

Furthermore, the iron removing means 36, 37 comprise at least one magnetic element 37 housed internally of the hollow cylinder 36.

Preferably, the magnetic element 37 has a substantially semi-cylindrical conformation.

Advantageously, the magnetic element 37 is of the type of a permanent magnet. Moreover, the iron removing chamber 35 comprises means for fixing the magnetic element 37 in a fixed position inside the hollow cylinder 36.

In other words, the hollow cylinder 36 is operable in rotation around the magnetic element 37 which, being kept in a fixed position, generates a magnetic field defining an active area 40 positioned at the sorting section 38, and a passive area 41 opposite the active area 40, and positioned at the collection section 39.

In other words, at the active area 40 the field lines close outside of the hollow cylinder 36, and at the same time as at the passive area 41 the field lines close internally inside of the hollow cylinder 36.

This way, any ferrous fragments contained in the wastes to be treated coming out of the grinding means 19, 20, crossing the collection section 39, are attracted by the magnetic element 37 and, therefore, adhere to the hollow cylinder 36 which drags them from the active area 40 to the passive area 41 where they are unloaded into the collection section 39.

In this regard, the iron removing chamber 35 comprises scraping means 42 for scraping the ferrous fragments from the hollow cylinder 36.

Specifically, the scraping means 42 are arranged at the passive area.

Even more specifically, the scraping means 42 are arranged on top of the collection section 39 and are adapted to remove any ferrous fragments which have remained adhered to the hollow cylinder 36.

In addition, the plant 1 comprises directing means 43 for directing the wastes to be treated coming out of the grinding means 19, 20 towards the iron removing chamber 35.

The directing means 43 comprise at least one guiding stretch arranged below the rotor element 19 and adapted to facilitate the fall of the wastes to be treated from the grinding means 19, 20 towards the iron removing means 36, 37.

With reference to the particular embodiment shown in the illustrations, the directing means 43 comprise two guiding stretches opposite each other and arranged inclined and converging towards the iron removing means 36, 37.

As shown in Figure 7, alternative embodiments cannot however be ruled out wherein the plant 1 does not provide for the pretreatment chamber 16.

In this case, the plant 1 comprises the movement chamber 4 and the sorting chamber 17.

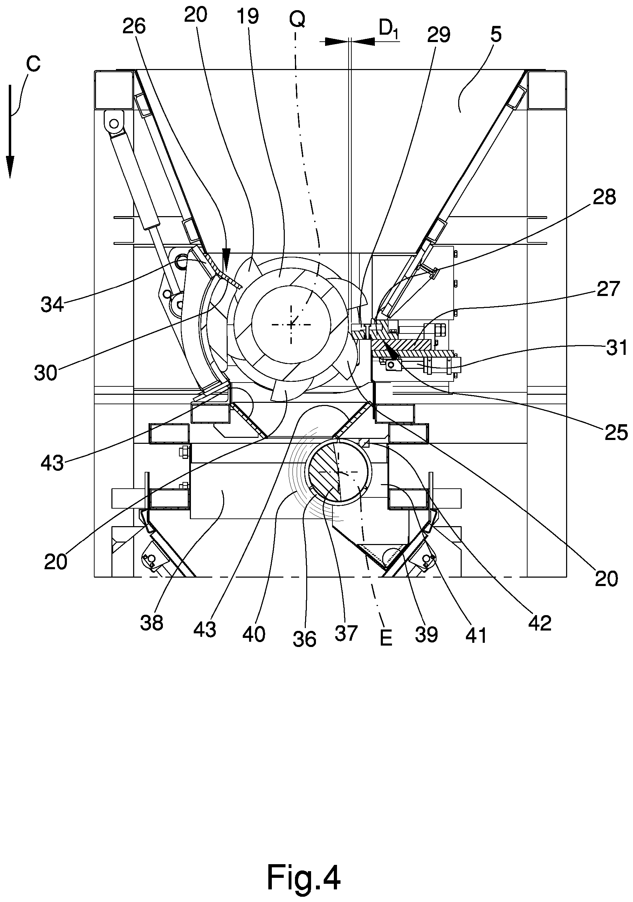

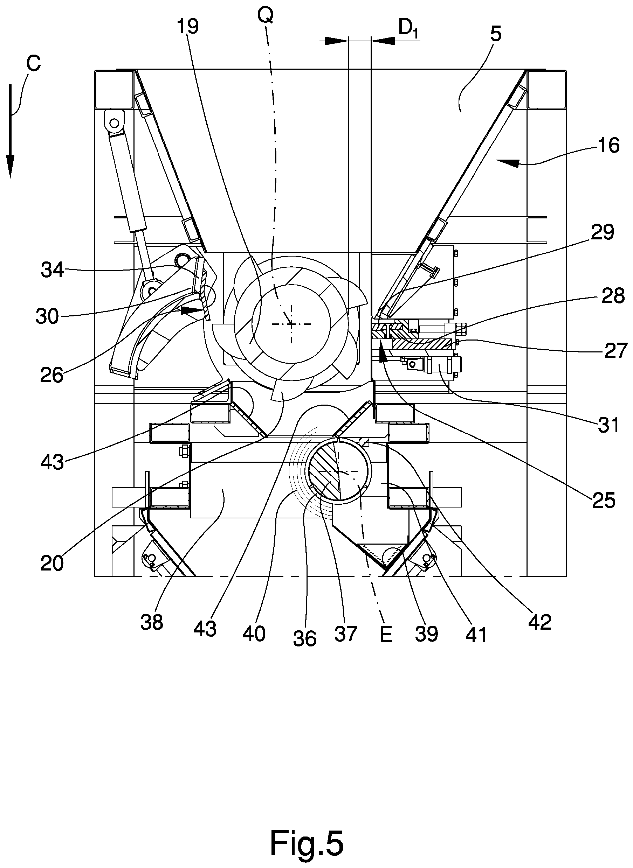

In the embodiment shown in Figures 4, 5, the collection section 39 consists, e.g., of a drawer in which the ferrous fragments are collected inside the plant 1 and which drawer must be emptied periodically.

Alternative embodiments cannot however be ruled out wherein the collection section 39 consists of an exit chute which conveys the ferrous fragments directly outside the plant 1.

Moreover, the plant 1 comprises at least one load cell 33 associated with the support frame 2, operationally connected to the processing and monitoring unit and adapted to detect at least one force value exerted by the wastes to be treated on the outer casing 3.

The plant preferably comprises a plurality of load cells 33 arranged below the movement chamber 4 and the sorting chamber 17, and adapted to detect at least one value of weight force exerted by the wastes to be treated on at least one portion of the movement chamber 4 and of the sorting chamber 17.

More specifically, the load cells 33 are adapted to send the value of weight force detected to the processing and monitoring unit which, by integrating this value with the first values of absorption detected and with the second values of absorption detected, adjusts the rotation speed of the grinding means 19, 20 and/or of the movement means 8, 9.

The processing and monitoring unit can in fact be programmed with the weight of the wastes to be treated entering the plant 1; this value is then compared with the first values of absorption and with the second values of absorption.

In case of high first values of absorption and low values of weight force measured at the movement chamber 4, the processing and monitoring unit intervenes by blocking the rotation of the grinding means 19, 20; this means that the presence of high first values of absorption is representative of an overload of the rotor element 19 and of the low presence of wastes to be treated inside the movement chamber 4.

On the contrary, in case of high second values of absorption and high values of weight force measured at the movement chamber 4, the processing and control unit intervenes by decreasing the rotation speed of the grinding means 19, 20. In this case, on the other hand, high second values of absorption in combination with equally high values of weight force are indicative of an overload of the movement means 8, 9 and therefore of an excessive rotation speed of the grinding means 19, 20.

The operation of the present invention is as follows.

The wastes to be treated enter the pretreatment chamber passing through the inlet opening 5.

Depending on the initial grain size of the wastes to be treated, the operator varies the predefined distance D₁ of the comb element 25 with respect to the rotor element 19.

At this point, the wastes to be treated pass through the grinding means 19, 20 which cause these to be crushed, moving these by means of the shredding elements 20 and causing these to abut against the covering element 29.

By reducing the grain size of the wastes to be treated, the latter pass through the predefined distance D₁ falling into the movement chamber 4.

Alternatively, when the plant 1 does not provide for the pretreatment chamber 16, the wastes to be treated pass through the inlet opening 5 entering directly into the movement chamber 4.

In accordance with a further embodiment, when the plant 1 does not provide for the pretreatment chamber 16, the wastes to be treated pass through the inlet opening 5 by entering directly into the iron removing chamber 35, sliding along the guiding stretches 43.

At this point, the rotation of the hollow cylinder 36 allows the removal of the ferrous fragments contained in the wastes to be treated, and the relevant collection inside the respective collection section 39.

The remaining wastes to be treated fall, along the direction of fall C, inside the movement chamber 4.

The Archimedean screw element 8 determines the movement of the wastes to be treated by moving these to the sorting chamber 17.

Specifically, when the movement of the Archimedean screw element 8 is blocked by the presence of fragments of wastes to be treated, the dimensions of which prevents the free rotation thereof, it is necessary to intervene by removing the latter from the movement chamber 4.

However, in case of the blocking of the Archimedean screw element 8, the operator activates the activation means so that the actuating means 15 allow the switch of the side walls 10 from the first angular configuration (Figure 6) in which they face upwards with respect to the horizontal plane P, to the second angular configuration (Figure 7) in which at least one side wall 10 faces downwards with respect to the horizontal plane P defining the unloading ramp for the wastes to be treated.

The switch from the first angular configuration to the second angular configuration makes the Archimedean screw element 8 easily accessible from the outside.

In other words, when the side walls 10 are open to define the unloading ramp, the wastes to be treated contained in the movement chamber 4 are unloaded outside the plant 1, considerably facilitating the removal operations of the bulky fragments and allowing the rapid resumption of the waste treatment process.

At this point, the operator activates the activation means so that the side walls 10 return to the first angular configuration.

Finally, the Archimedean screw element 8 conveys the wastes to be treated to the sorting chamber 17 where the sorting means 18 terminate the treatment thereof by separating them into a solid fraction and into a liquid or semi-liquid fraction.

The solid fraction comes out of the sorting chamber 17 through the first outlet opening 6 and, in parallel, the liquid or semi-liquid fraction comes out of the sorting chamber 17 through the second outlet opening 7.

It has in practice been ascertained that the described invention achieves the intended objects.

It is underlined that the particular measure of providing a movement chamber having movable lateral surfaces which can be opened to define an unloading opening allows considerably facilitating the removal operations of the bulky wastes to be treated.

In fact, this measure makes it possible to eliminate the long work times necessary for disassembling the movement chamber, allowing the waste treatment process to be resumed quickly.

## Claims

1. Plant (1) for the treatment of wastes, comprising at least one support frame (2) of an outer casing (3), in turn, comprising:
- at least one movement chamber (4) comprising movement means (8, 9) of said wastes to be treated along a direction of forward movement (D); and
- at least one sorting chamber (17) arranged downstream of said movement chamber (4) with respect to said direction of forward movement (D) and comprising sorting means (18) of said wastes to be treated fed by said movement means (8 , 9);
**characterized by** the fact that said movement chamber (4) comprises at least two side walls (10) of which at least one of said side walls (10) is associated movable with said support frame (2) to define an unloading opening (11) of said wastes to be treated, said side walls (10) being associated with said support frame (2) by interposition of respective connecting means (12) along a substantially horizontal hinging axis (I) and by the fact that said movement chamber (4) comprises a lower portion (13) arranged in the proximity of said hinging axis (I) and an upper portion (14) opposed to said lower portion (13), said movement means (8, 9) being located at said lower portion (13).

2. Plant (1) according to claim 1, **characterized by** the fact that said movement means (8, 9) comprise at least one Archimedean screw element (8) associated with motorization means adapted to operate it in rotation around a rotation axis (R) substantially parallel to said hinging axis (I), the latter being arranged in the proximity of said Archimedean screw element (8).

3. Plant (1) according to one or more of the preceding claims, **characterized by** the fact that said movement chamber (4) has a substantially triangular front section in which said Archimedean screw element (8) is arranged at a vertex portion coincident with said lower portion (13).

4. Plant (1) according to one or more of the preceding claims, **characterized by** the fact that said at least one hinging axis (I) is arranged on top of said rotation axis (R).

5. Plant (1) according to one or more of the preceding claims, **characterized by** the fact that it comprises actuating means (15) associated with at least one of said side walls (10) and adapted to allow the movement between:
- a first angular configuration in which said side walls (10) face upwards with respect to a horizontal plane (P) passing through hinging axes (I) and said movement chamber (4) is closed and isolated from the outside; and
- a second angular configuration in which said at least one side wall (10) faces downwards with respect to said horizontal plane (P) to define an unloading ramp for said wastes to be treated, said movement chamber (4) being open and accessible from the outside.

6. Plant (1) according to one or more of the preceding claims, **characterized by** the fact that said side walls (10) are associated movable with said support frame (2) and define an angle (A) comprising inside said movement means (8, 9), and by the fact that:
- in said first angular configuration, said angle (A) is convex and said side walls (10) face upwards with respect to said horizontal plane (P); and
- in said second angular configuration, said angle (A) is concave and said side walls (10) are arranged in a sloping position to define said unloading ramp.

7. Plant (1) according to one or more of the preceding claims, **characterized by** the fact that said actuating means (15) comprise at least one actuator element associated with at least one of said side walls (10).

8. Plant (1) according to one or more of the preceding claims, **characterized by** the fact that it comprises at least one pretreatment chamber (16) arranged on top of said movement chamber (4) and comprising grinding means (19, 20) of said wastes to be treated.

## Patentansprüche

1. Anlage (1) zur Behandlung von Abfällen, umfassend mindestens einen Tragrahmen (2) eines Außengehäuses (3), das wiederum umfasst:
- mindestens eine Bewegungskammer (4) umfassend Bewegungsmittel (8, 9) für die zu behandelnden Abfälle entlang einer Vorwärts-Bewegungsrichtung (D); und
- mindestens eine Sortierkammer (17), die stromabwärts der Bewegungskammer (4) in Bezug auf die Vorwärts-Bewegungsrichtung (D) angeordnet ist und umfassend Sortiermittel (18) für die zu behandelnden Abfälle, die von den Bewegungsmitteln (8, 9) zugeführt werden;
**dadurch gekennzeichnet, dass** die Bewegungskammer (4) mindestens zwei Seitenwände (10) umfasst, von denen mindestens eine der Seitenwände (10) beweglich dem Tragrahmen (2) zugeordnet ist, um eine Entladeöffnung (11) für die zu behandelnden Abfälle zu bilden, wobei die Seitenwände (10) dem Tragrahmen (2) durch Zwischenanordnung entsprechender Verbindungsmittel (12) entlang einer im Wesentlichen horizontalen Scharnierachse (I) zugeordnet sind, und dadurch, dass die Bewegungskammer (4) einen unteren Abschnitt (13) umfasst, der in der Nähe der Scharnierachse (I) angeordnet ist, und einen oberen Abschnitt (14), der dem unteren Abschnitt (13) gegenüberliegt, wobei sich die Bewegungsmittel (8, 9) am unteren Abschnitt (13) befinden.

2. Anlage (1) nach Anspruch 1, **dadurch gekennzeichnet, dass** die Bewegungsmittel (8, 9) mindestens ein archimedisches Schraubenelement (8) umfassen, das Antriebsmitteln zugeordnet ist, die dazu ausgelegt sind, es um eine Rotationsachse (R) zu drehen, die im Wesentlichen parallel zur Scharnierachse (I) ist, wobei letztere in der Nähe des archimedischen Schraubenelements (8) angeordnet ist.

3. Anlage (1) nach einem oder mehreren der vorstehenden Ansprüche, **dadurch gekennzeichnet, dass** die Bewegungskammer (4) einen im Wesentlichen dreieckigen vorderen Abschnitt hat, in dem das archimedische Schraubenelement (8) an einem Scheitelpunkt angeordnet ist, der mit dem unteren Abschnitt (13) zusammenfällt.

4. Anlage (1) nach einem oder mehreren der vorstehenden Ansprüche, **dadurch gekennzeichnet, dass** die mindestens eine Scharnierachse (I) oberhalb der Rotationsachse (R) angeordnet ist.

5. Anlage (1) gemäß einem oder mehreren der vorstehenden Ansprüche, **dadurch gekennzeichnet, dass** sie Betätigungsmittel (15) umfasst, die mindestens einer der Seitenwände (10) zugeordnet sind und so ausgelegt sind, dass sie die Bewegung erlaubt zwischen:
- einer ersten Winkelkonfiguration, in der die Seitenwände (10) nach oben zeigen in Bezug auf eine durch die Scharnierachse (I) verlaufende horizontale Ebene (P) und die Bewegungskammer (4) geschlossen und nach außen isoliert ist; und
- einer zweiten Winkelkonfiguration, in der die mindestens eine Seitenwand (10) nach unten zeigt in Bezug auf die horizontale Ebene (P), um eine Entladerampe für die zu behandelnden Abfälle zu bilden, wobei die Bewegungskammer (4) offen und von außen zugänglich ist.

6. Anlage (1) gemäß einem oder mehreren der vorstehenden Ansprüche, **dadurch gekennzeichnet, dass** die Seitenwände (10) beweglich dem Tragrahmen (2) zugeordnet sind und einen Winkel (A) bilden, der innerhalb der Bewegungsmittel (8, 9) liegt, und dass:
- in der ersten Winkelkonfiguration der Winkel (A) konvex ist und die Seitenwände (10) nach oben zeigen in Bezug auf die horizontale Ebene (P); und
- in der zweiten Winkelkonfiguration der Winkel (A) konkav ist und die Seitenwände (10) in einer geneigten Position angeordnet sind, um die Entladerampe zu bilden.

7. Anlage (1) gemäß einem oder mehreren der vorstehenden Ansprüche, **dadurch gekennzeichnet, dass** die Betätigungsmittel (15) mindestens ein Betätigungselement umfassen, das mindestens einer der Seitenwände (10) zugeordnet ist.

8. Anlage (1) gemäß einem oder mehreren der vorstehenden Ansprüche, **dadurch gekennzeichnet, dass** sie mindestens eine Vorbehandlungskammer (16) umfasst, die oben auf der Bewegungskammer (4) angeordnet ist und Zerkleinerungsmittel (19, 20) umfasst für die zu behandelnden Abfälle.

## Revendications

1. - Installation (1) pour le traitement de déchets, comprenant au moins un bâti de support (2) d'une enveloppe externe (3), comprenant à son tour :
- au moins une chambre de déplacement (4) comprenant des moyens de déplacement (8, 9) desdits déchets à traiter le long d'une direction de déplacement vers l'avant (D) ; et
- au moins une chambre de tri (17) disposée en aval de ladite chambre de déplacement (4) par rapport à ladite direction de déplacement vers l'avant (D) et comprenant des moyens de tri (18) desdits déchets à traiter alimentés par lesdits moyens de déplacement (8, 9) ;
**caractérisée par le fait que** ladite chambre de déplacement (4) comprend au moins deux parois latérales (10) dont au moins l'une desdites parois latérales (10) est associée de façon mobile audit bâti de support (2) pour définir une ouverture de déchargement (11) desdits déchets à traiter, lesdites parois latérales (10) étant associées audit bâti de support (2) par interposition de moyens de liaison respectifs (12) le long d'un axe d'articulation (I) sensiblement horizontal et **par le fait que** ladite chambre de déplacement (4) comprend une partie inférieure (13) disposée à proximité dudit axe d'articulation (I) et une partie supérieure (14) opposée à ladite partie inférieure (13), lesdits moyens de déplacement (8, 9) étant situés à ladite partie inférieure (13).

2. - Installation (1) selon la revendication 1, **caractérisée par le fait que** lesdits moyens de déplacement (8, 9) comprennent au moins un élément vis d'Archimède (8) associé à des moyens de motorisation aptes à l'actionner en rotation autour d'un axe de rotation (R) sensiblement parallèle audit axe d'articulation (I), ce dernier étant disposé à proximité dudit élément vis d'Archimède (8).

3. - Installation (1) selon une ou plusieurs des revendications précédentes, **caractérisée par le fait que** ladite chambre de déplacement (4) présente une section avant sensiblement triangulaire dans laquelle ledit élément vis d'Archimède (8) est disposé à une partie sommet coïncidant avec ladite partie inférieure (13).

4. - Installation (1) selon une ou plusieurs des revendications précédentes, **caractérisée par le fait que** ledit au moins un axe d'articulation (I) est disposé au-dessus dudit axe de rotation (R).

5. - Installation (1) selon une ou plusieurs des revendications précédentes, **caractérisée par le fait qu'**elle comprend des moyens d'actionnement (15) associés à au moins l'une desdites parois latérales (10) et aptes à permettre le déplacement entre :
- une première configuration angulaire dans laquelle lesdites parois latérales (10) sont orientées vers le haut par rapport à un plan horizontal (P) passant par des axes d'articulation (I) et ladite chambre de déplacement (4) est fermée et isolée de l'extérieur ; et
- une seconde configuration angulaire dans laquelle ladite au moins une paroi latérale (10) est orientée vers le bas par rapport audit plan horizontal (P) pour définir une rampe de déchargement pour lesdits déchets à traiter, ladite chambre de déplacement (4) étant ouverte et accessible de l'extérieur.

6. - Installation (1) selon une ou plusieurs des revendications précédentes, **caractérisée par le fait que** lesdites parois latérales (10) sont associées de façon mobile audit bâti de support (2) et définissent un angle (A) comprenant à l'intérieur lesdits moyens de déplacement (8, 9), et **par le fait que** :
- dans ladite première configuration angulaire, ledit angle (A) est convexe et lesdites parois latérales (10) sont orientées vers le haut par rapport audit plan horizontal (P) ; et
- dans ladite seconde configuration angulaire, ledit angle (A) est concave et lesdites parois latérales (10) sont disposées dans une position inclinée pour définir ladite rampe de déchargement.

7. - Installation (1) selon une ou plusieurs des revendications précédentes, **caractérisée par le fait que** lesdits moyens d'actionnement (15) comprennent au moins un élément actionneur associé à au moins l'une desdites parois latérales (10).

8. - Installation (1) selon une ou plusieurs des revendications précédentes, **caractérisée par le fait qu'**elle comprend au moins une chambre de prétraitement (16) disposée au-dessus de ladite chambre de déplacement (4) et comprenant des moyens de broyage (19, 20) desdits déchets à traiter.
